# EUROPÄISCHE PATENTSCHRIFT

(11) **EP 3 724 689 B1**
(45) Veröffentlichungstag und Bekanntmachung des Hinweises auf die Patenterteilung: **03.07.2024**
(21) Anmeldenummer: 18825890.9
(22) Anmeldetag: 06.12.2018
(51) Int. Cl.: G01S 19/42, G05D 1/00, G01S 19/21

(54) **VERFAHREN ZUM BETREIBEN EINES GNSS-SENSORS EINES FAHRZEUGS**
METHOD FOR OPERATING A GNSS SENSOR OF A VEHICLE
PROCÉDÉ DE FONCTIONNEMENT D'UN CAPTEUR GNSS D'UN VÉHICULE

(30) Priorität: 11.12.2017 DE 102017222356
(43) Veröffentlichungstag der Anmeldung: 21.10.2020
(73) Patentinhaber: Robert Bosch GmbH, 70442 Stuttgart (DE)
(72) Erfinder: EWERT, Marlon Ramon, 74199 Untergruppenbach (DE)
(86) Internationale Anmeldenummer: PCT/EP2018/083846
(87) Internationale Veröffentlichungsnummer: WO 2019/115357

(56) Entgegenhaltungen:
- DE-A1-102016 124 278
- US-A1- 2016 109 551
- US-A1- 2017 219 716
- WORNER M ET AL: "Integrity for autonomous driving: A survey", 2016 IEEE/ION POSITION, LOCATION AND NAVIGATION SYMPOSIUM (PLANS), IEEE, 11. April 2016 (2016-04-11), Seiten 666-671, XP032905897, DOI: 10.1109/PLANS.2016.7479759 [gefunden am 2016-05-26]

## Beschreibung

Die Erfindung betrifft ein Verfahren zum Betreiben eines GNSS-Sensors eines Fahrzeugs, dessen Steueroperationen durch eine elektronische Steuereinheit beeinflussbar sind und ein Verfahren zum Betreiben eines Fahrzeugs, dessen Steueroperationen durch eine elektronische Steuereinheit beeinflussbar sind.

Offenbart ist ein GNSS-Sensor sowie ein Fahrzeug mit einem GNSS-Sensor. Auch offenbart ist ein entsprechend eingerichtetes Computerprogramm.

Ein autonomes Fahrzeug ist ein Fahrzeug, das ohne Fahrer auskommt. Das Fahrzeug fährt dabei autonom, indem es beispielsweise den Straßenverlauf, andere Verkehrsteilnehmer oder Hindernisse selbständig erkennt und die entsprechenden Steuerbefehle im Fahrzeug berechnet sowie diese an die Aktuatoren im Fahrzeug weiterleitet, wodurch der Fahrverlauf des Fahrzeugs korrekt beeinflusst wird. Der Fahrer ist bei einem vollautonomen Fahrzeug nicht am Fahrgeschehen beteiligt.

Gegenwärtig verfügbare Fahrzeuge sind noch nicht in der Lage autonom zu agieren. Zum einen, weil die entsprechende Technik noch nicht voll ausgereift ist. Zum anderen, weil es heutzutage noch gesetzlich vorgeschrieben ist, dass der Fahrzeugführer jederzeit selbst in das Fahrgeschehen eingreifen können muss. Dies erschwert die Umsetzung von autonomen Fahrzeugen. Jedoch gibt es bereits Systeme verschiedener Hersteller, die ein autonomes oder teilautonomes Fahren darstellen. Diese Systeme befinden sich in der intensiven Testphase. Bereits heute ist absehbar, dass in einigen Jahren vollautonome Fahrzeugsysteme auf den Markt kommen werden, sobald die oben genannten Hürden aus dem Weg geräumt wurden.

Unter anderem benötigt ein Fahrzeug für einen autonomen Betrieb eine Sensorik, die in der Lage ist eine hochgenaue Fahrzeugposition, insbesondere mit Hilfe von Navigationssatellitendaten (GPS, GLONASS, Beidou, Galileo), zu ermitteln. Hierbei kann die Sensorik Korrekturdaten von so genannten Korrekturdiensten mitverwenden, um die Position des Fahrzeugs noch genauer zu berechnen.

Aus DE 10 2016 124 278 A1 und US 2016/109551 A1 sind Verfahren mit den Merkmalen des Oberbegriffs des Anspruchs 1 bekannt. US 2017/219716 A1 offenbart ein Verfahren zur Bestimmung der Position einer mobilen Plattform.

Erfindungsgemäß wird gemäß Anspruch 1 ein Verfahren zum Betreiben eines GNSS-Sensors eines Fahrzeugs vorgeschlagen, dessen Steueroperationen durch eine elektronische Steuereinheit beeinflussbar sind, umfassend zumindest folgende Schritte:
a) Empfangen von Satellitendaten,
b) Auswerten der Satellitendaten,
c) Deaktivieren zumindest eines Betriebsmodus des GNSS-Sensors, wenn zumindest ein Teil der Satellitendaten für eine Positionsbestimmung des Fahrzeugs ungeeignet ist,
wobei das Deaktivieren des zumindest einen Betriebsmodus des GNSS-Sensors an ein übergeordnetes System gemeldet wird, wobei der zumindest eine Betriebsmodus des GNSS-Sensors wieder aktiviert wird, wenn das übergeordnete System ein Aktivierungssignal auslöst, wobei das übergeordnete System eine Cloud ist und wobei bei der Meldung der Deaktivierung des zumindest einen Betriebsmodus der GNSS-Sensor seine letzte gültige Position und/oder Uhrzeit und/oder den Grund der Deaktivierung an das übergeordnete System übermittelt, wobei das übergeordnete System dann überprüft, ob die Deaktivierung legitim war und das übergeordnete System dann eine entsprechende Antwort sendet, gemäß welcher der GNSS-Sensor wieder aktiviert wird, wenn die Deaktivierung nicht legitim ist. Erfindungsgemäß wird ein entsprechendes Verfahren zum Betreiben eines Fahrzeugs gemäß Anspruch 6 vorgeschlagen. Weitere vorteilhafte Ausführungen sind erfindungsgemäß in den abhängigen Ansprüchen angegeben.

GNSS steht für globales Navigationssatellitensystem. GNSS ist ein System zur Positionsbestimmung und/oder Navigation auf der Erde und/oder in der Luft durch den Empfang der Signale von Navigationssatelliten, hier als Satellitendaten bezeichnet. GNSS ist dabei ein Sammelbegriff für die Verwendung bestehender und künftiger globaler Satellitensysteme, wie GPS (NAVSTRAR GPS), GLONASS, Beidou und Galileo. Damit handelt es sich bei dem GNSS-Sensor um eine Sensorik, die geeignet ist Navigationssatellitendaten zu empfangen und zu verarbeiten, etwa auszuwerten. Vorzugsweise ist der GNSS-Sensor in der Lage, eine hochgenaue Fahrzeugposition mit Hilfe von Navigationssatellitendaten (GPS, GLONASS, Beidou, Galileo) zu ermitteln.

Bei dem Fahrzeug, dessen Steueroperationen durch eine elektronische Steuereinheit beeinflussbar sind, handelt es sich bevorzugt um ein autonomes Fahrzeug. Besonders bevorzugt ist das Fahrzeug ein autonomes Automobil. Der GNSS-Sensor kann in verschiedenen Betriebsmodi betrieben werden. Bevorzugt kann der GNSS-Sensor in einem GPS-Modus, GLONASS-Modus, Beidou-Modus und/oder Galileo-Modus betrieben werden. Hierbei bedeutet beispielsweise ein Betrieb im GPS-Modus, dass insbesondere nur das GPS-Signal ausgewertet wird.

Die hier vorgeschlagene Lösung beschreibt mit anderen Worten insbesondere ein Verfahren zur (teilweisen) Deaktivierung eines GNSS-Sensors in einem (autonomen) Fahrzeug. Eine (zumindest teilweise) Deaktivierung des GNSS-Sensors ist beispielsweise dann sinnvoll, wenn Satellitendaten stark gestört sind. Dies kann beispielsweise bei einem starken Sonnensturm oder bei extremen Wetterverhältnissen der Fall sein. Im Rahmen der vorgeschlagenen Lösung kann eine (zumindest teilweise) Deaktivierung eines GNSS-Sensors in einem Fahrzeug (entweder) direkt oder indirekt erfolgen.

Erfindungsgemäß wird vorgeschlagen, dass der zumindest eine Betriebsmodus des GNSS-Sensors deaktiviert wird, wenn der GNSS-Sensor den Satellitendaten die Information entnimmt, dass diese fehlerbehaftet oder gestört sind. Dies kann als eine direkte Deaktivierung bezeichnet werden. Hierzu können in den Satellitendaten Zusatzdaten hinein kodiert sein, sodass insbesondere während des Auswertens in Schritt b), vorzugsweise durch den GNSS-Sensor, erkannt werden kann, dass diese Satellitendaten unbrauchbar sind. In diesem Fall kann sich der GNSS-Sensor bzw. zumindest ein Betriebsmodus des GNSS-Sensors bezüglich der Ausgabedaten so lange deaktivieren bzw. deaktiviert werden, bis wieder gültige GNSS-Daten von den Satelliten empfangen werden. Die Eingangssignale der Satellitendaten können in diesem Fall wie üblich verarbeitet werden. Bevorzugt wird der GNSS-Sensor bei ungültigen Satellitendaten jedoch unmittelbar deaktiviert. Dies erlaubt den Vorteil, dass autonome Fahrzeuge beispielsweise bezüglich des GNSS-Sensors außer Betrieb genommen werden können, wenn die Satellitendaten eines Gebiets beispielsweise durch einen Sonnensturm oder durch extreme Wetterverhältnisse stark verfälscht sind. Dadurch können starke Positionsungenauigkeiten im automatisierten Fahren von vorne herein verhindert und somit schwerwiegende Unfälle vermieden werden.

Erfindungsgemäß wird vorgeschlagen, dass der zumindest eine Betriebsmodus des GNSS-Sensors deaktiviert wird, wenn dem GNSS-Sensor über eine Kommunikationsverbindung die Information zugeleitet wird, dass die Satellitendaten fehlerbehaftet oder gestört sind. Dies kann als eine indirekte Deaktivierung bezeichnet werden. Hierzu können beispielsweise über eine im Fahrzeug verbaute Car-to-X-Kommunikationsverbindung oder über einen Korrekturservice Statusdaten zum GNSS-System für das Gebiet, in welchem sich das Fahrzeug befindet, empfangen werden. Bei (zu stark) gestörten Satellitendaten kann der GNSS-Sensor somit von außen, insbesondere durch einen speziellen Fehlercode, vorzugsweise für eine bestimmte Zeitdauer deaktiviert werden. Vorzugsweise wird der GNSS-Sensor eines (autonomen) Fahrzeugs gezielt von außen deaktiviert, wenn die Güte von Satellitendaten einen bestimmten Wert unterschreitet.

Erfindungsgemäß wird vorgeschlagen, dass der zumindest eine Betriebsmodus des GNSS-Sensors deaktiviert wird, wenn sich das Fahrzeug in einem bestimmten (räumlichen) Gebiet befindet. Dies bedeutet mit anderen Worten insbesondere, dass die (teilweise) Deaktivierung des GNSS-Sensors gebietsabhängig bzw. ortsabhängig erfolgen kann. Bei dem bestimmten Gebiet handelt es sich vorzugsweise um ein Gebiet, für das eine unzureichende Satellitenabdeckung prognostiziert wurde. Alternativ oder kumulativ kann es sich bei dem bestimmten Gebiet um ein solches handeln, für das bereits bekannt ist, dass die dort ankommenden Satellitendaten fehlerbehaftet oder gestört sind.

Weiterhin kann es sich bei dem bestimmten Gebiet um ein Stadtgebiet handeln.

In Städten ist der Satellitenempfang regelmäßig sehr schlecht. Dies ist insbesondere in Häuserschluchten zu beobachten, was im Bereich der GNSS-Systeme auch als "urban canyon"-Problem bezeichnet wird. Bevorzugt erfolgt eine gezielte (teilweise) Deaktivierung eines GNSS-Sensors von außen, wenn das Fahrzeug in ein Stadtgebiet hineinfährt. Dadurch kann erreicht werden, dass ein autonomes Fahrzeug in diesem Gebiet gezwungen wird sich alternativ zu lokalisieren oder in diesem Gebiet nur manuell steuerbar ist. Dies ist vorteilhaft, da die Performance des GNSS-Sensors in diesem Gebiet regelmäßig nicht für eine autonome Fahrfunktion ausreicht. Umgekehrt kann dadurch erreicht werden, dass ein GNSS-Sensor nur dann zur Anwendung kommt, wenn sichergestellt ist, dass die Güte der empfangenen Satellitendaten auch für das autonome Fahren ausreicht.

Weiterhin bevorzugt wird der zumindest eine Betriebsmodus des GNSS-Sensors für eine bestimmte Zeitdauer, etwa die Zeitdauer eines Sonnensturms, deaktiviert. Besonders bevorzugt ist die bestimmte Zeitdauer gebietsabhängig bzw. ortsabhängig.

Erfindungsgemäß wird vorgeschlagen, dass das Deaktivieren des zumindest einen Betriebsmodus des GNSS-Sensors an ein übergeordnetes System gemeldet wird. Hierbei wird erfindungsgemäß der zumindest eine Betriebsmodus des GNSS-Sensors wieder aktiviert, wenn das übergeordnete System ein Aktivierungssignal auslöst. Bei dem übergeordneten System kann es sich um eine GNSS-Verwaltung oder erfindungsgemäß um eine sogenannte Cloud handeln.

Bevorzugt informiert der GNSS-Sensor eine Infrastruktur oder erfindungsgemäß eine Cloud, vorzugsweise über eine Car-to-X Kommunikationsverbindung, zusammen mit einer Fahrzeug-ID darüber, dass er (teilweise) deaktiviert wurde, wenn in Schritt c) ein Deaktivieren erfolgt. Hierbei übermittelt erfindungsgemäß der GNSS-Sensor zudem seine letzte gültige Position und/oder Uhrzeit und/oder den Grund der Deaktivierung (z. B. Code in Satellitendaten oder Kommando von außen).

Bevorzugt prüft die Cloud dann, ob die (teilweise) Deaktivierung des GNSS-Sensors erfindungsgemäß legitim war bzw. ist. Legitim ist die Deaktivierung insbesondere, wenn ein Grund (z. B. Code in Satellitendaten oder Kommando von außen) für die Deaktivierung vorliegt. Besonders bevorzugt sendet die Cloud, vorzugsweise über Car-to-X, anschließend eine (entsprechende) Antwort an den GNSS-Sensor. Hierbei kann vorgesehen sein, dass der GNSS-Sensor im (teilweise) deaktivierten Zustand bleibt, wenn bzw. solange die Deaktivierung legitim ist. Ist die Deaktivierung hingegen nicht (mehr) legitim, so wird der GNSS-Sensor erfindungsgemäß aus der Cloud heraus erneut aktiviert. Sofern es keinen Grund für die Deaktivierung des GNSS-Sensors gab, kann dies ein Hinweis für einen internen GNSS-Sensor-Error sein oder es könnte sein, dass der GNSS-Sensor durch einen Signaljammer gestört wurde. Diese Information kann von der Cloud entsprechend verarbeitet werden.

Erfindungsgemäß wird vorgeschlagen, dass (nur) der Betriebsmodus des GNSS-Sensors deaktiviert wird, der einem bestimmten Satellitensystem zugeordnet ist. Das bestimmte Satellitensystem ist vorzugsweise ein solches, für das eine Signalstörung vorliegt bzw. erkannt wurde. Beispielsweise wird (nur) der GPS-Modus des GNSS-Sensors deaktiviert, wenn (nur) das GPS-Signal fehlerhaft oder gestört ist. Mit anderen Worten ist es bevorzugt, wenn (situationsbedingt) nur bestimmte Teile des GNSS-Sensors deaktiviert werden. Bei gestörten GPS-Daten kann es beispielsweise sinnvoll sein, nur die GPS-Pfade im GNSS-Sensor (temporär) zu deaktivieren, während die weiteren Satellitensignale, etwa GLONASS oder Galileo oder Beidou, weiterhin durch den GNSS-Sensor ausgewertet werden.

Erfindungsgemäß wird ein Verfahren zum Betreiben eines Fahrzeugs vorgeschlagen. Bei dem Fahrzeug handelt es sich um ein solches, dessen Steueroperationen durch eine elektronische Steuereinheit beeinflussbar sind. Das Verfahren umfasst zumindest folgende Schritte:
a) Bestimmen der Position des Fahrzeugs unter Verwendung eines GNSS-Sensors, der gemäß einem hier vorgeschlagenen erfindungsgemäßen Verfahren zum Betreiben eines GNSS-Sensors betrieben wird,
b) Beschränken des Einflusses der elektronischen Steuereinheit auf zumindest eine der Steueroperationen des Fahrzeugs, wenn zumindest ein Betriebsmodus des GNSS-Sensors deaktiviert wurde.

Bevorzugt erfolgt in Schritt b) eine Limitierung der (von der Steuereinheit vorgebbaren) Fahrgeschwindigkeit des Fahrzeugs, wenn zumindest ein Betriebsmodus des GNSS-Sensors deaktiviert wurde. Weiterhin bevorzugt erfolgt in Schritt b) ein Abschalten eines autonomen Fahrmodus, wenn zumindest ein Betriebsmodus des GNSS-Sensors deaktiviert wurde. Das Abschalten des autonomen Fahrmodus erfolgt insbesondere dann, wenn mindestens zwei oder sogar alle Betriebsmodi des GNSS-Sensors deaktiviert wurden. Dem liegt die Idee zugrunde, dass autonome Fahrzeuge, in welchen der GNSS-Empfänger temporär deaktiviert wurde, nur noch manuell betrieben werden sollen oder aber der autonome Fahrmodus jedenfalls soweit eingeschränkt werden soll, dass beispielsweise eine Maximalgeschwindigkeit nicht überschritten werden kann.

Nach einem weiteren Aspekt, der nicht Teil der Erfindung ist, wird ein GNSS-Sensor vorgeschlagen, der zur Durchführung eines hier vorgeschlagenen Verfahrens zum Betreiben eines GNSS-Sensors vorgesehen und eingerichtet ist.

Nach einem weiteren Aspekt, der nicht Teil der Erfindung ist, wird ein Fahrzeug vorgeschlagen, das mit einem hier vorgeschlagenen GNSS-Sensor ausgestattet ist. Bei dem Fahrzeug handelt es sich um ein solches, dessen Steueroperationen durch eine elektronische Steuereinheit beeinflussbar sind. Bevorzugt ist das Fahrzeug ein autonomes Fahrzeug, besonders bevorzugt ein autonomes Automobil.

Unter einem GNSS-Sensor kann vorliegend ein elektrisches Gerät verstanden werden, das Sensorsignale verarbeitet und in Abhängigkeit davon Steuer- und/oder Datensignale ausgibt. Der Sensor kann eine Schnittstelle aufweisen, die hard- und/oder softwaremäßig ausgebildet sein kann. Bei einer hardwaremäßigen Ausbildung kann die Schnittstelle beispielsweise Teil eines sogenannten System-ASICs (ASIC = Application Specific Integrated Circuit) sein, der verschiedenste Funktionen der Vorrichtung beinhaltet. Es ist jedoch auch möglich, dass die Schnittstelle eigene, integrierte Schaltkreise umfasst oder zumindest teilweise aus diskreten Bauelementen besteht. Bei einer softwaremäßigen Ausbildung können die Schnittstellen Softwaremodule sein, die beispielsweise auf einem Mikrocontroller neben anderen Softwaremodulen vorhanden sind. Von Vorteil ist auch ein Computerprogrammprodukt oder Computerprogramm mit

Programmcode, das nicht Teil der Erfindung ist, das auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Die hier vorgestellte Lösung sowie deren technisches Umfeld werden nachfolgend anhand der Figuren näher erläutert. Es ist darauf hinzuweisen, dass die Offenbarung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und/oder Erkenntnissen aus anderen Figuren und/oder der vorliegenden Beschreibung zu kombinieren. Es zeigen schematisch:
- Fig. 1:: einen beispielhaften Ablauf eines erfindungsgemäßen Verfahrens zum Betreiben eines GNSS-Sensors, und
- Fig. 2:: ein Fahrzeug mit einem GNSS-Sensor.

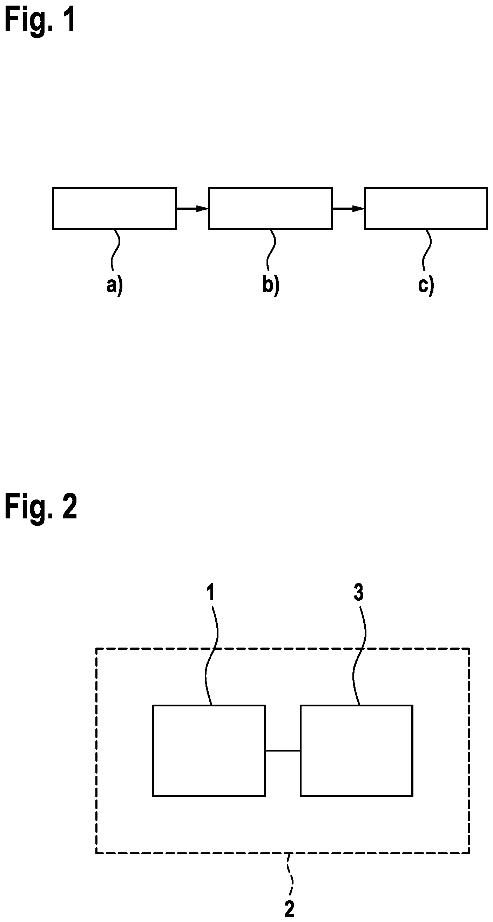

Fig. 1 zeigt schematisch einen beispielhaften Ablauf eines erfindungsgemäßen Verfahrens zum Betreiben eines GNSS-Sensors. Zunächst werden in Schritt a) Satellitendaten empfangen. Diese werden in Schritt b) ausgewertet. In Schritt c) erfolgt gemäß Anspruch 1 ein Deaktivieren zumindest eines Betriebsmodus des GNSS-Sensors, wenn zumindest ein Teil der Satellitendaten für eine Positionsbestimmung des Fahrzeugs ungeeignet ist.

Fig. 2 zeigt schematisch ein Fahrzeug 2 mit einem GNSS-Sensor 1, der zur Durchführung des im Zusammenhang mit Fig. 1 erläuterten Verfahrens vorgesehen und eingerichtet ist. Bei dem Fahrzeug 2 handelt es sich um ein solches, dessen Steueroperationen durch eine elektronische Steuereinheit 3 beeinflussbar sind, etwa um ein autonom operierendes Automobil. Der GNSS-Sensor 1 ist mit der elektronischen Steuereinheit 3 verbunden.

Die hier vorgestellte Lösung trägt insbesondere dazu bei, dass schwerwiegende und gefährliche Positionsfehler in autonomen Fahrzeugen verhindert und somit die Sicherheit autonomer Fahrzeuge erhöht werden kann.

## Patentansprüche

1. Verfahren zum Betreiben eines GNSS-Sensors (1) eines Fahrzeugs (2), dessen Steueroperationen durch eine elektronische Steuereinheit (3) beeinflussbar sind, umfassend zumindest folgende Schritte:
a) Empfangen von Satellitendaten,
b) Auswerten der Satellitendaten,
c) Deaktivieren zumindest eines Betriebsmodus des GNSS-Sensors (1), wenn zumindest ein Teil der Satellitendaten für eine Positionsbestimmung des Fahrzeugs (2) ungeeignet ist,
wobei das Deaktivieren des zumindest einen Betriebsmodus des GNSS-Sensors (1) an ein übergeordnetes System gemeldet wird, wobei der zumindest eine Betriebsmodus des GNSS-Sensors (1) wieder aktiviert wird, wenn das übergeordnete System ein Aktivierungssignal auslöst, wobei das übergeordnete System eine Cloud ist und wobei bei der Meldung der Deaktivierung des zumindest einen Betriebsmodus der GNSS-Sensor seine letzte gültige Position und/oder Uhrzeit und/oder den Grund der Deaktivierung an das übergeordnete System übermittelt,
**dadurch gekennzeichnet, daß** das übergeordnete System dann überprüft, ob die Deaktivierung legitim war und das übergeordnete System dann eine entsprechende Antwort sendet, gemäß welcher der GNSS Sensor (1) wieder aktiviert wird, wenn die Deaktivierung nicht legitim ist.

2. Verfahren nach Anspruch 1, wobei der zumindest eine Betriebsmodus des GNSS-Sensors (1) deaktiviert wird, wenn der GNSS-Sensor (1) den Satellitendaten die Information entnimmt, dass diese fehlerbehaftet oder gestört sind.

3. Verfahren nach Anspruch 1 oder 2, wobei der zumindest eine Betriebsmodus des GNSS-Sensors (1) deaktiviert wird, wenn dem GNSS-Sensor (1) über eine Kommunikationsverbindung die Information zugeleitet wird, dass die Satellitendaten fehlerbehaftet oder gestört sind.

4. Verfahren nach einem der vorhergehenden Ansprüche, wobei der zumindest eine Betriebsmodus des GNSS-Sensors (1) deaktiviert wird, wenn sich das Fahrzeug (2) in einem bestimmten Gebiet befindet.

5. Verfahren nach einem der vorhergehenden Ansprüche, wobei der Betriebsmodus des GNSS-Sensors (1) deaktiviert wird, der einem bestimmten Satellitensystem zugeordnet ist.

6. Verfahren zum Betreiben eines Fahrzeugs (2), dessen Steueroperationen durch eine elektronische Steuereinheit (3) beeinflussbar sind, umfassend zumindest folgende Schritte:
a) Bestimmen der Position des Fahrzeugs (2) unter Verwendung eines GNSS-Sensors (1), der gemäß dem Verfahren nach einem der Ansprüche 1 bis 5 betrieben wird,
b) Beschränken des Einflusses der elektronischen Steuereinheit (3) auf zumindest eine der Steueroperationen des Fahrzeugs (2), wenn zumindest ein Betriebsmodus des GNSS-Sensors (1) deaktiviert wurde.

## Claims

1. Method for operating a GNSS sensor (1) of a vehicle (2), the control operations of which are influenceable by an electronic control unit (3), comprising at least the following steps:
a) receiving satellite data,
b) evaluating the satellite data,
c) deactivating a least one operating mode of the GNSS sensor (1) if at least a portion of the satellite data is unsuitable for determining the position of the vehicle (2),
wherein the deactivation of the at least one operating mode of the GNSS sensor (1) is reported to a superordinate system, wherein the at least one operating mode of the GNSS sensor (1) is reactivated if the superordinate system triggers an activation signal, wherein the superordinate system is a cloud and wherein the report of the deactivation of the at least one operating mode of the GNSS sensor results in the last valid position and/or time of said sensor and/or the reason for deactivation being transmitted to the superordinate system, **characterized in that** the superordinate system then checks whether the deactivation was legitimate and the subordinate system then transmits a corresponding response, according to which the GNSS sensor (1) is reactivated if the deactivation is not legitimate.

2. Method according to Claim 1, wherein the at least one operating mode of the GNSS sensor (1) is deactivated if the GNSS sensor (1) gathers from the satellite data the information that said data are erroneous or impaired.

3. Method according to Claim 1 or 2, wherein the at least one operating mode of the GNSS sensor (1) is deactivated if the GNSS sensor (1) is supplied with the information that the satellite data are erroneous or impaired via a communication connection.

4. Method according to one of the preceding claims, wherein the at least one operating mode of the GNSS sensor (1) is deactivated if the vehicle (2) is located in a certain area.

5. Method according to one of the preceding claims, wherein the operating mode of the GNSS sensor (1) that is associated with a certain satellite system is deactivated.

6. Method for operating a vehicle (2), the control operations of which are influenceable by an electronic control unit (3), comprising at least the following steps:
a) determining the position of the vehicle (2) by using a GNSS sensor (1) operated using the method according to one of Claims 1 to 5,
b) limiting the influence of the electronic control unit (3) to at least one of the control operations of the vehicle (2) if at least one operating mode of the GNSS sensor (1) has been deactivated.

## Revendications

1. Procédé pour faire fonctionner un capteur GNSS (1) d'un véhicule (2) dont les opérations de commande peuvent être influencées par une unité de commande électronique (3), comprenant au moins les étapes suivantes :
a) réception de données satellite,
b) évaluation des données satellite,
c) désactivation d'au moins un mode de fonctionnement du capteur GNSS (1) lorsqu'au moins une partie des données satellite n'est pas appropriée pour une détermination de position du véhicule (2),
dans lequel la désactivation dudit au moins un mode de fonctionnement du capteur GNSS (1) est signalée à un système de niveau supérieur, dans lequel ledit au moins un mode de fonctionnement du capteur GNSS (1) est réactivé lorsque le système de niveau supérieur déclenche un signal d'activation, dans lequel le système de niveau supérieur est un nuage et dans lequel, lors de la notification de la désactivation dudit au moins un mode de fonctionnement, le capteur GNSS transmet au système de niveau supérieur sa dernière position valide et/ou l'heure et/ou la raison de la désactivation, **caractérisé en ce que** le système de niveau supérieur vérifie alors si la désactivation était légitime et le système de niveau supérieur envoie alors une réponse correspondante selon laquelle le capteur GNSS (1) est réactivé lorsque la désactivation n'est pas légitime.

2. Procédé selon la revendication 1, dans lequel ledit au moins un mode de fonctionnement du capteur GNSS (1) est désactivé lorsque le capteur GNSS (1) extrait des données satellite l'information selon laquelle celles-ci sont erronées ou perturbées.

3. Procédé selon la revendication 1 ou 2, dans lequel ledit au moins un mode de fonctionnement du capteur GNSS (1) est désactivé lorsque le capteur GNSS (1) reçoit par l'intermédiaire d'une liaison de communication l'information selon laquelle les données satellite sont erronées ou perturbées.

4. Procédé selon l'une quelconque des revendications précédentes, dans lequel ledit au moins un mode de fonctionnement du capteur GNSS (1) est désactivé lorsque le véhicule (2) se trouve dans une zone déterminée.

5. Procédé selon l'une quelconque des revendications précédentes, dans lequel le mode de fonctionnement du capteur GNSS (1) est désactivé lorsqu'il est associé à un système de satellite déterminé.

6. Procédé pour faire fonctionner un véhicule (2) dont les opérations de commande peuvent être influencées par une unité de commande électronique (3), comprenant au moins les étapes suivantes :
a) détermination de la position du véhicule (2) à l'aide d'un capteur GNSS (1) fonctionnant suivant le procédé selon l'une quelconque des revendications 1 à 5,
b) limitation de l'influence de l'unité de commande électronique (3) sur au moins l'une des opérations de commande du véhicule (2) lorsqu'au moins un mode de fonctionnement du capteur GNSS (1) a été désactivé.
